(19) Europäisches Patentamt
European Patent Office
Office européen des brevets

(11) Veröffentlichungsnummer: **0 047 461**
**B1**

(12) **EUROPÄISCHE PATENTSCHRIFT**

(45) Veröffentlichungstag der Patentschrift: **30.05.84**

(51) Int. Cl.³: **C 07 F 9/40,** C 07 F 9/38

(21) Anmeldenummer: **81106789.1**

(22) Anmeldetag: **31.08.81**

(54) **Verfahren zur Herstellung von Vinylphosphonsäurederivaten.**

(30) Priorität: **06.09.80 DE 3033615**

(43) Veröffentlichungstag der Anmeldung: **17.03.82 Patentblatt 82/11**

(45) Bekanntmachung des Hinweises auf die Patenterteilung: **30.05.84 Patentblatt 84/22**

(84) Benannte Vertragsstaaten: **BE CH DE FR GB IT LI NL**

(56) Entgegenhaltungen:
**DE - A - 2 249 336**
**DE - A - 2 457 493**
**US - A - 2 951 086**
**US - A - 3 064 030**
**US - A - 3 641 202**
**US - A - 3 694 527**
**US - A - 3 991 019**

(73) Patentinhaber: **HOECHST AKTIENGESELLSCHAFT, Postfach 80 03 20, D-6230 Frankfurt am Main 80 (DE)**

(72) Erfinder: **Kleiner, Hans-Jerg, Dr., Altkönigstrasse 11a, D-6242 Kronberg/Taunus (DE)**
Erfinder: **Dürsch, Walter, Dr., In der Braubach 4, D-6240 Königstein/Taunus (DE)**

**EP 0 047 461 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Vinylphosphonsäurediester können bekanntlich aus 2-Halogenethanphosphonsäurediestern durch Halogenwasserstoffabspaltung mit Basen hergestellt werden. Erwünscht ist ein einfaches Verfahren, aus 2-Halogenethanphosphonsäurederivaten Vinylphosphonsäurederivate herzustellen.

Ein Verfahren zur Herstellung von Vinylphosphonsäure-bis-chlorethylester durch Erhitzen von Chlorethan-phosphonsäure-bis-chlorethylester in Gegenwart einer Base ist aus der US-A 3 064 030 bekannt. Der Nachteil dieses Verfahrens liegt darin, dass man zur Abspaltung der Salzsäure aus der Chlorethangruppe eine mindestens äquivalente Menge einer basisch reagierenden Verbindung benötigt. Die dabei anfallenden Salze bedeuten insgesamt aber eine unerwünschte Belastung. US-A 3 641 202 beschreibt die Oligomerisierung von Vinylphosphonsäure-bis-chlorethylester durch Erhitzen mit geringen Mengen einer Base. Über die Herstellung dieses Vinylphosphonsäureesters werden keine Aussagen gemacht. Die DE-A 2 457 493 beschreibt die thermische Abspaltung von Ethylendichlorid aus Estern von phosphorhaltigen Säuren. Die dort beschriebene Reaktion wird aber nur soweit geführt, bis sich Kondensationsprodukte gebildet haben, die Strukturen der Formel

$$>\overset{O}{\overset{\|}{P}}-O-\text{Alkylen}-O-\overset{O}{\overset{\|}{P}}<$$

aufweisen. Die Herstellung weitgehend chlorfreier, Vinylgruppen enthaltender Reaktionsprodukte durch weiteres Erhitzen und Abspalten von Ethylendichlorid geht aus diesem Stand der Technik nicht hervor.

Es wurde nun überraschenderweise gefunden, dass man auf einfache und wirtschaftliche Weise Vinylphosphonsäurederivate mit einem Restgehalt an Chlor von 1 bis 10% herstellen kann, indem man 2-Chlorethanphosphonsäurederivate, die 2-Chlorethylestergruppen enthalten, auf Temperaturen von 150–230 °C, vorzugsweise 170–215 °C erhitzt, wobei 1,2-Dichlorethan abgespalten wird. Die Abspaltung kann gegebenenfalls in Gegenwart saurer oder basischer Katalysatoren durchgeführt werden. Weiterhin kommen Salze der unterphosphorigen Säure als Katalysatoren in Frage.

Die als Ausgangsprodukt dienenden 2-Chlorethanphosphonsäurederivate, welche 2-Chlorethylestergruppen enthalten, werden hergestellt durch die bekannte Arbusow-Umlagerung von Tris-chlorethylphosphit. Bei dieser Umlagerung erhält man als wichtigste Verbindung den 2-Chlorethanphosphonsäure -bis-2- chlorethylester. Weiterhin erhält man bei der Arbusow-Umlagerung von Tris-chlorethylphosphit auch häufig nicht destillierbare sogenannte Polykondensate von im wesentlichen unbekannten Strukturen, darunter auch die Verbindung der Formel

$$ClCH_2CH_2\underset{OCH_2CH_2Cl}{\overset{O}{\overset{\|}{P}}}OCH_2CH_2\overset{O}{\overset{\|}{P}}(OCH_2CH_2Cl)_2$$

Alle diese Produkte können allein oder in Mischung miteinander als Ausgangsprodukt für die Herstellung der Vinylphosphonsäurederivate dienen. Ausserdem kann man auch von dem 2-Chlorethanphosphonsäuremono-2-chlorethylester ausgehen.

Bevorzugt ist jedoch als Ausgangsprodukt das gesamte Reaktionsgemisch der Arbusow-Umlagerung, wie es bei der Umlagerung anfällt, d.h. im Regelfall der 2-Chlorethanphosphonsäure -bis-2-chlorethylester im Gemisch mit den nicht destillierbaren sogenannten Polykondensaten.

Als saure oder basische Katalysatoren kommen zahlreiche Verbindungen in Frage. Als saure Katalysatoren lassen sich verwenden:

A) Schwefelsäure, Phosphorsäure, Chlorwasserstoffsäure, Bromwasserstoffsäure;

B) Halogenhaltige Carbonsäure mit einem $P_{Ka}$-Wert $<2,5$, wie Dichloressigsäure, Trichloressigsäure, Trifluoressigsäure;

C) Aromatische Sulfonsäuren mit einem $P_{Ka}$-Wert $<2,5$, wie Benzolsulfonsäure, p-Toluolsulfonsäure;

D) Bevorzugt Phosphinsäuren mit 2 bis 18 Kohlenstoffatomen wie Dimethylphosphinsäure, Methylethylphosphinsäure, Dioktylphosphinsäure, Methylphenylphosphinsäure, Diphenylphosphinsäure;

E) Besonders bevorzugt Phosphonsäure mit 1 bis 18 Kohlenstoffatomen und deren Halbester mit 1 bis 4 Kohlenstoffatomen im Alkoholrest wie Methanphosphonsäure, Propanphosphonsäure, Propanphosphonsäuremonomethylester, Oktadekanphosphonsäure, 2-Chlorethanphosphonsäure, 2-Chlorethanphosphonsäuremono-2-chlorethylester, Vinylphosphonsäure, Vinylphosphonsäuremono-2-chlorethylester, Vinylphosphonsäuremonoethylester, Benzolphosphonsäure.

F) Ebenfalls besonders bevorzugt Pyrophosphonsäuren oder deren Halbester wie 2-Chlorethanpyrophosphonsäure, Benzolpyrophosphonsäure, Vinylpyrophosphonsäure, Vinylpyrophosphonsäuremono-2-chlorethylester.

G) Sehr geeignet sind auch die sauren Reaktionsgemische, die bei dem erfindungsgemässen Verfahren entstehen.

Geeignet sind auch die Alkalisalze, bevorzugt Natrium- oder Kaliumsalze, der unter A bis F genannten Säuren.

Als basische Katalysatoren lassen sich verwenden:

A) Tertiäre aliphatische und aromatische Amine und Phosphine mit 3 bis 18 Kohlenstoffatomen wie Trimethylamin, Tripropylamin, Tributylamin, Triphenylamin, Trimethylphosphin, Triethylphosphin, Tripropylphosphin, Tributylphosphin, Triphenylphosphin, und Tris-(p-dimethylaminophenyl)-phosphin und die entsprechenden gemischten Amine, Phosphine, Phospholane und Phospholene wie Dimethylethylamin, Diethylbutylamin, N-Dimethylanilin, 4-Methyl-N-dimethylanilin, N-Diethylanilin, N,N-Tetramethylphenyldiamin oder N-Methylpyrrolidin; Methyldiethylphosphin, Dimethylpropylphosphin, Diethylbenzylphosphin, 1-Methyl-phospholen-3 und 2-Ethyl-3-methylphospholen-3.

B) Quartäre Ammoniumsalze bzw. Phosphoniumsalze mit 3 bis 18 Kohlenstoffatomen wie Tetramethylammoniumchlorid oder -bromid, Tetraethylphosphoniumchlorid, Trimethylbenzylammoniumchlorid, Triethylbenzylammoniumchlorid, Triethylbenzylammoniumbromid, Trimethylbenzylphosphoniumchlorid, Triphenylethylphosphonium-2,4-diaminobenzosulfonat;

C) Heterocyclische Verbindungen mit aromatischem Charakter wie Pyridin, 4-(Dimethylamino)-pyridin, Chinolin, ihre verschiedenen Alkyl- und Dialkyl-, vorzugsweise Methyl- bzw. Dimethylderivate, Imidazol, N-Vinylimidazol, Benzthiazol, 2-Amino-6-ethoxybenzthiazol, ferner Phosphabenzole;

D) Säureamide wie Dimethylformamid, Diethylformamid, N-Dimethylacetamid, N-Diethylpropionamid, N-Methylbenzamid, N-Methylpyrrolidon, N,N'-Tetramethylterephthalsäurediamid oder Harnstoffe wie Tetramethylharnstoff und Trimethylphenylharnstoff;

E) Sonstige Stickstoff- oder Phosphorverbindungen mit einer höheren Wertigkeit eines N- oder P-Atoms als 3 wie Pyridin-N-oxid, Trimethylphosphinoxid, Tributylphosphinoxid, Trihexylphosphinoxid, Triphenylphosphinoxid, Trihexylphosphinoxid, Trimethylphosphinoxid, Dimethylphenylphosphinoxid, Dimethylphenylphosphinsulfid, Dimethylchlormethylphosphinoxid, Dimethyleikosylphosphinoxid, Dimethyldodecylphosphinoxid, Dimethylphosphinoxid, Dimethylpyrrolidinyl-1-methylphosphinoxid, Triphenylphosphin-dichlorid, Dimethyldodecylphosphinsulfid, Triphenylphosphinimin, Dimethylchlormethylphosphindichlorid, N-2-Dimethylphosphinylethyl-methyl-acetamid, N-2-Dimethylphosphinyl-ethylmethyl-amin, Phospholenoxid wie 1-Methylphospholen-1-oxid und 1-Ethyl-3-methylphsopholen-1-oxid;

F) Amide der phosphinigen und phosphonigen Säure und der Phosphin- und Phosphonsäuren sowie ihrer Thioanaloga, wie Ethanphosphonsäure-bis-diethylamid, Methan-butanphosphinigsäure-dimethylamid, Diethylphosphinigsäureisobutylamid. Ferner Triamide der Phosphor- und der Triophosphorsäure wie Hexamethylphosphorsäuretrisamid.

G) Alkalicarbonate, bevorzugt Soda und Pottasche, Alkalihydroxyde, bevorzugt Natrium- und Kaliumhydroxyd, Alkalialkoholate, bevorzugt Natriummethylat.

Weiterhin kommen als Katalysatoren in Frage die Salze der hypophosphorigen Säure, z.B. Natriumhypophosphit, Kaliumhypophosphit. Diese Katalysatoren sind besonders bevorzugt auch als Zusatzstoffe, die eine Dunkelverfärbung des Reaktionsgutes weitgehend verhindern.

Die Katalysatoren werden in Mengen von 0,01 bis 10, bevorzugt 0,1 bis 5 Gew.-%, eingesetzt. Bei Verwendung der bereits gewonnenen sauren Reaktionsgemische können auch grössere Mengen von 10 bis 50 Gew.-% eingesetzt werden.

Das Verfahren wird im allgemeinen so durchgeführt, dass die Ausgangsprodukte auf die Reaktionstemperatur erhitzt werden. Dann beginnt die Abspaltung des 1,2-Dichlorethans, in der Regel begleitet durch gleichzeitige Abspaltung geringerer Mengen Chlorwasserstoff. Das sich abspaltende 1,2-Dichlorethan destilliert in der Regel unter Normaldruck ab, gegebenenfalls unter Zuhilfenahme eines Inertgasstroms. Als Inertgas kommt insbesondere Stickstoff in Frage. Es kann im Einzelfall vorteilhaft sein, vor allem zum Ende der Reaktion, im Vakuum abzudestillieren. Die Abspaltung des 1,2-Dichlorethans ist nach etwa 5 bis etwa 20 Stunden beendet. Die Abspaltung des 1,2-Dichlorethans wird nicht bis zur völligen Chlorfreiheit des Endproduktes durchgeführt, sondern nur bis zu einem Gehalt von 1 bis 10%, vorzugsweise 5 bis 8%. Dieses Chlor liegt vor in Form von Chloräthylgruppen. Weitgehend chlorfreie Endprodukte sind für die Weiterverarbeitung meistens weniger geeignet, da sie häufig dunkelverfärbt sind und bei den hohen Reaktionstemperaturen bereits zur Zersetzung neigen.

Die Reaktionstemperaturen liegen bei 150–230 °C, vorzugsweise 170–215 °C. Höhere Temperaturen sind möglich, bringen aber keinen Vorteil. Es besteht die Gefahr der Zersetzung, auch der Polymerisation.

Beim Einsatz der zuvor genannten Katalysatoren kann bei etwas tieferen Temperaturen gearbeitet werden als ohne Katalysatoren. Weiterhin beeinflussen die Katalysatoren häufig die Farbe des Endproduktes günstig.

Das Verfahren kann auch kontinuierlich gestaltet werden. Es kann vorteilhaft sein, Polymerisationsinhibitoren wie z.B. Hydrochinon, Hydrochinonmonomethylether oder Phenothiazin zuzusetzen.

Die Reaktionsprodukte bestehen aus Gemischen von Vinylphosphonsäurederivaten, wobei die Art und die Menge der einzelnen Bestandteile nicht bekannt ist.

Daneben enthält das Reaktionsgemisch auch noch Vinylpyrophosphonsäure bzw. deren Derivate. Unabhängig von der Art der verwendeten Ausgangsverbindungen sind aber alle in dem Reaktionsprodukt vorhandenen Einzelverbindungen dadurch gekennzeichnet, dass sie Vinylphosphonsäure-Gruppen enthalten und, in Abhängigkeit vom Chlorgehalt, eine gewisse Anzahl von Chloräthylgruppen. Die erfindungsgemässen Vinylphosphonsäurederivate sind bei dem angegebenen Chlorgehalt von 1 bis 10% wasserlöslich.

Die so erhaltenen Gemische von verschiedenen Vinylphosphonsäurederivaten können direkt ohne Isolierung einzelner Verbindungen verwendet werden, und zwar als wertvolle Zwischenprodukte für die Herstellung von Substanzen zur Flammhemmung für Textilmaterialien. Hierzu werden die Vinylphosphonsäurederivate zunächst mit Ethyloxid umgesetzt. Diese Oxethylierungsprodukte werden dann über die Vinylgruppen auf dem auszurüstenden Material polymerisiert, wodurch man einen ausgezeichneten Flammhemmeffekt erhält.

Beispiel 1

120 g 2- Chlorethanphosphonsäure-bis -2-chlorethylester werden auf 208–215 °C unter Rühren erhitzt. Im Verlauf von 5 Stunden destillieren 59 g 1,2-Dichlorethan ab. Es verbleiben 59 g Vinylphosphonsäurederivate

(Säurezahl: 371, Jodzahl: 144, 22,7% P, 7,6% Cl).

Beispiel 2

240 g Arbusow-Umlagerungsgemisch von Trischlorethylphosphit, das 50% 2-Chlorethanphosphonsäure-bis -2- chlorethylester und 16% 2- Chlorethanphosphonsäure -2- chlorethylester-2- (bis- [2-chlorethoxy] -phosphono)-ethylester enthält, werden auf 190–212 °C unter Rühren erhitzt. Im Verlauf von 7,5 Stunden werden 108 g 1,2-Dichlorethan abgespalten. Eine weitere Stunde wird Wasserstrahlvakuum angelegt, wobei sich weitere 10 g 1,2-Dichlorethan in einer der Pumpe vorgeschalteten Kühlfalle sammeln. Es verbleiben 117 g Vinylphosphonsäurederivate

(Säurezahl: 415, Jodzahl 141, 3,1% Chlor).

Beispiel 3

800 g Arbusow-Umlagerungsgemisch, wie es in Beispiel 2 verwendet wurde, werden mit 2,4 g Natriumhypophosphit-1-hydrat versetzt und unter Stickstoffspülung auf 160 °C unter Rühren erhitzt. Es beginnt die Abspaltung von 1,2-Dichlorethan. Nun wird die Temperatur allmählich auf ca. 180 °C gesteigert und 1100 g desselben Arbusow-Gemisches, vermischt mit 3,3 g Natriumhypophosphit-1-hydrat, gleichmässig zugetropft, während 1,2-Dichlorethan abdestilliert. Nach 7,5 Stunden wird im Zuge dieses Verfahrens die Temperatur auf 200 °C gesteigert. Nach 12 Stunden wird unter Stickstoffspülung abgekühlt. Man erhält 821 g 1,2-Dichlorethan mit einem Gehalt von 0,3% Chlorwasserstoff in der Vorlage. In einer der Vorlage nachgeschalteten Kühlfalle sind weitere 25 g 1,2-Dichlorethan gesammelt. Es verbleiben 1035 g Vinyl phosphonsäurederivate

(Säurezahl: 414, Jodzahl: 126, 22,8% Phosphor, 8,9% Chlor).

Beispiel 4

135 g 2-Chlorethanphosphonsäure-bis-2-chlorethylester und 4 g Phosphorsäuretrisdimethylamid werden unter Rühren 6 Stunden auf 185–190 °C erhitzt. Dabei destillieren 66 g 1,2-Dichlorethan in die Vorlage ab. Anschliessend wird 6 Stunden ein Vakuum von 47 mbar angelegt. In einer der Vorlage nachgeschalteten Kühlfalle kondensieren noch 6 g 1,2-Dichlorethan. Es verbleiben 65,5 g Vinylphosphonsäurederivate

(Säurezahl: 374, Jodzahl: 121, 24,1% Phosphor, 1,5% Chlor).

Beispiel 5

85,3 g nicht destillierbare Polykondensate, die bei der Arbusow-Umlagerung von Trischlorethylphosphit anfallen, mit einem Anteil von 32% an 2-Chlorethanphosphonsäure -2- chlorethylester-2-(bis- [2-chlorethoxy] -phosphono)-ethylester und 1,7 g 4-Dimethylaminopyridin werden unter Rühren 10 Stunden auf 190 °C erhitzt. Dabei destillieren 32 g 1,2-Dichlorethan ab. Es verbleiben 53 g Vinylphosphonsäurederivate

(Säurezahl: 362, Jodzahl: 140, 23,2% Phosphor, 5,6% Chlor).

Beispiel 6

85,3 g nicht destillierbare Polykondensate, wie sie in Beispiel 5 verwendet wurden, und 3,4 g 1-Methyl-1-oxo-$\Delta^3$-phospholen werden 13 Stunden auf 180–190 °C unter Rühren erhitzt. Es destillieren 29,5 g 1,2-Dichlorethan ab. Es verbleiben 53 g Vinylphosphonsäurederivate

(Säurezahl: 383, Jodzahl: 133, 24,5% Phosphor, 4,7% Chlor).

Beispiel 7

85,3 g nicht destillierbare Polykondensate, wie sie in Beispiel 5 verwendet wurden, und 1,7 g Triphenylphosphin werden unter Rühren auf 190 °C erhitzt. Innerhalb von 9 Stunden werden 29,5 g 1,2-Dichlorethan abdestilliert. Durch Anlagen eines Vakuums von 67 mbar werden weitere 5,5 g 1,2-Dichlorethan in einer der Vorlage nachgeschalteten Kühlfalle aufgefangen. Es verbleiben 51 g Vinylphosphonsäurederivate

(Säurezahl: 371, Jodzahl: 133, 24,3% Phosphor, 4,1% Chlor).

Beispiel 8

85,3 g nicht destillierbare Polykondensate, wie sie in Beispiel 5 verwendet wurden, und 1,7 g 1,4-Diazabicyclo[2,2,2]-octan («Dabco») werden auf 185–190 °C unter Rühren auf 190 °C erhitzt. Innerhalb von 5 Stunden destillieren 32 g 1,2-Dichlorethan ab. Man erhält 54 g Vinylphosphonsäurederivate

(Säurezahl: 368, Jodzahl: 124, 23,1% Phosphor, 5,1% Chlor).

Beispiel 9

269,5 g Arbusow-Umlagerungsgemisch, wie es in Beispiel 2 verwendet wurde, und 10 g Vinylphosphonsäure werden auf 195 g unter Rühren erhitzt. Nach einer Stunde beginnt 1,2-Dichlorethan abzudestillieren. Wenn ca. 50 g 1,2-Dichlorethan abdestilliert sind, werden innerhalb von 3 Stunden weitere 1347,5 g Ausgangsmaterial zudosiert. Dann wird 6 Stunden weiter bei 195 g unter Rühren erhitzt. Danach wird bei dieser Temperatur ein Vakuum von 67 mbar angelegt. Insgesamt werden 678 g 1,2-Dichlorethan in der Vorlage und 128 g 1,2-Dichlorethan in einer der Vorlage nachgeschalteten Kältefalle gesammelt. Es verbleiben 804 g Vinylphosphonsäurederivate

(Säurezahl: 384, Jodzahl: 146, 24,5% Phosphor, 4,4% Chlor).

Beispiel 10

202 g Arbusow-Umlagerungsprodukt, wie es im Beispiel 2 verwendet wurde, und 1 g Natriumchlorid werden unter Rühren auf 190 °C erhitzt. Innerhalb von 9 Stunden destillieren 87,5 g 1,2-Dichlorethan ab. Man erhält 114 g Vinylphosphonsäurederivate

(Säurezahl: 325, Jodzahl: 144, 22,2% Phosphor, 9,9% Chlor).

Beispiel 11

202 g Arbusow-Umlagerungsgemisch, wie es im Beispiel 2 verwendet wurde, und 1 g Ethanphosphonsäuremononatriumsalz werden unter Rühren auf 190 °C erhitzt. Innerhalb von 12 Stunden destillieren 91,5 g 1,2-Dichlorethan ab. Es verbleiben 110 g Vinylphosphonsäurederivate

(Säurezahl: 350, Jodzahl: 128, 23,0% Phosphor, 8,4% Chlor).

## Patentansprüche

1. Verfahren zur Herstellung von Vinylphosphonsäurederivaten mit einem Restgehalt an Chlor von 1 bis 10%, dadurch gekennzeichnet, dass man 2-Chlorethanphosphonsäurederivate, die 2-Chlorethylestergruppen enthalten, oder den 2-Chlorethanphosphonsäuremono-2-chlorethylester auf Temperaturen von 150–230 °C erhitzt.

2. Verfahren nach Anspruch 1, dadurch gekennzeichnet, dass man die Reaktion in Gegenwart basischer Katalysatoren durchführt.

3. Verfahren nach Anspruch 1, dadurch gekennzeichnet, dass man die Reaktion in Gegenwart von Salzen der unterphosphorigen Säure durchführt.

## Revendications

1. Procédé de préparation de dérivés de l'acide vinylphosphonique ayant une teneur résiduelle en chlore de 1 à 10%, procédé caractérisé en ce qu'on chauffe à des températures de 150–230 °C des dérivés de l'acide chloro-2 éthane-phosphonique renfermant des radicaux chloro-2 éthyles de fonction ester, ou le chloro-2 éthane-phosphonate de mono-(chloro-2 éthyle).

2. Procédé selon la revendication 1 caractérisé en ce qu'on effectue la réaction en présence de catalyseurs basiques.

3. Procédé selon la revendication 1 caractérisé en ce qu'on effectue la réaction en présence de sels de l'acide hypophosphoreux.

## Claims

1. A process for the preparation of vinylphosphonic acid derivatives having a residual content of chlorine of 1 to 10% which is characterized by heating 2-chloro-ethanephosphonic acid derivatives which contain 2-chloroethylester groups or the 2-chloroethanephosphonic acid mono-2-chloroethylester to temperatures of from 150 to 230 °C.

2. A process as claimed in claim 1, wherein the reaction is carried out in the presence of basic catalysts.

3. A process as claimed in claim 1, wherein the reaction is carried out in the presence of salts of hypophosphoric acid.